# EUROPEAN PATENT APPLICATION

(11) **EP 0 868 983 A1**
(43) Date of publication of application: **07.10.1998**
(21) Application number: 97830154.7
(22) Date of filing: 28.03.1997
(51) Int. Cl.: B27D 1/08, B32B 21/13, F16L 9/01, F16L 9/16, B65H 81/08

(54) **Tube in wood material and process for manufacturing the same**

(71) Applicant: Carra, Antonio, 26040 Gussola (Cremona) (IT)
(72) Inventor: Carra, Antonio, 26040 Gussola (Cremona) (IT)
(74) Representative: Righetti, Giuseppe

(57) **Abstract**

A tube of wood material is provided which comprises a plurality of superposed layers (2) mutually engaged by interposition of a bonding or adhesive material and each formed by a laminate element (2a). Also provided is a process for manufacturing a tube of wood material consisting in arranging a core (3), carrying out subsequent winding steps about the core of a plurality of laminate elements (2a) and slipping off the manufactured tube from the core (3).

## Description

The present invention relates to a tube of wood material and a process for manufacturing the same.

It is known that employment of tubular elements made of wood is not presently widespread, due both to the fact that these elements have limited and non-uniform mechanical-strength features owing to a poor evenness from a structural point of view of the logs or massive portions of wood material from which they are drawn, and the reduced sizes, above all in length, that necessarily they can offer.

In addition, clearly, tube production directly from massive portions of wood would involve a waste of wood material which practically is intolerable from many points of view, not only strictly in terms of economical loss.

Under this situation, the technical task underlying the present invention is to provide a tube of wood material and a process for manufacturing the same, capable of substantially obviating the mentioned drawbacks.

Within the scope of this technical task it is an important aim of the invention to provided a tube of wood material having mechanical-strength features that can be substantially compared with those of similar tubes of metal material or some plastics having much more reduced weights, the overall dimensions being the same.

Another important aim of the invention is to provided a tube of wood material that practically has no limits in length and diameter and enables use in a wide range of applications, even in cases in which imperviousness to liquids and/or gases is required together with non inflammability.

It is a further aim of the invention to provide a process for manufacturing a tube of wood material that is simple and inexpensive and enables waste of wood material to be limited to the maximum.

The technical task mentioned and the aims specified are substantially achieved by a tube made of wood material which is characterized in that it comprises a plurality of successively superposed layers mutually engaged by interposition of bonding or adhesive material and in that each layer is formed of a laminate element of wood material.

The technical task mentioned and the aims specified are also achieved by a process for manufacturing a tube of wood material which is characterized in that it comprises the steps of suitably arranging a core having an outer perimeter, in cross section, corresponding to the inner perimeter of the tube to be made and being at least substantially as long as the length of said tube, carrying out subsequent steps of winding around said core, a plurality of laminate elements adapted to define a plurality of respective superposed layers, one adhesive material layer having been disposed at least on the inner face of each said laminate element so as to mutually engage said laminate elements in an undetachable manner and obtain a unitary body defining the tube to be made, and slipping off the tube thus made from said core.

Description of a preferred but non-exclusive embodiment of a tube of wood material and the process for manufacturing the same will be now given hereinafter, by way of non-limiting example, with reference to the accompanying drawings, in which:

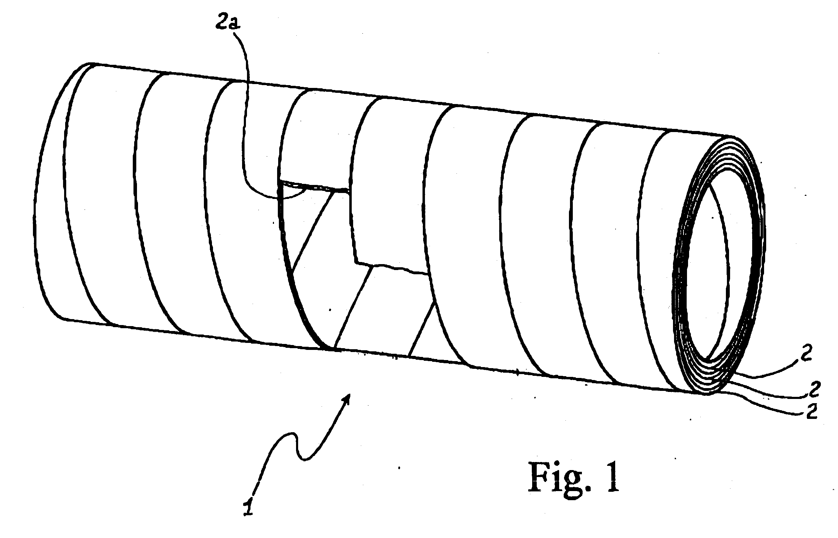

- Fig. 1 is a perspective view partly in section of a tube of wood material in accordance with the invention;
- Fig. 2 is an elevational side view diagrammatically showing a plant adapted to put the process of the invention into practice;
- Fig. 3 is an enlarged side view showing a winding step of a ribbon-like laminate element provided in the process;
- Fig. 4 shows alternation in the winding directions of the laminate elements used in the process;
- Fig. 5 is a top view of the plant in Fig. 2 showing the different angle arrangement for each stroke of a movable delivery unit of the laminate elements;
- Fig. 6 shows the pressing action provided in the process during the winding steps of the laminate elements; and
- Fig. 7 diagrammatically shows the step of slipping off a tube from a core employed for manufacturing it.

With reference to the drawings, the tube of wood material in accordance with the invention has been generally identified by reference numeral 1.

It comprises a plurality of superposed layers 2 mutually engaged by interposition of an adhesive material so as to form a unitary body.

Each layer 2 is formed of a laminate element 2 of wood material substantially having a ribbon-like conformation and selected from known wood kinds available on the market which are adapted to form veneers, that is thin sheets having a thicknesses included, just as an indication, between 1/10 and 15-20/10 of one millimetre and varying widths included, still by way of example, between 5 and 700 mm.

As kinds of wood appropriate to form veneers it is known that the following can be used: poplar, pinewood, pine, birch, mahogany, palisander, beechwood, walnut, durmast wood, cherry, ash, elm, acacia wood and exotic woods.

Adhesive materials interposed between the different cylindrical layers may be selected, depending on requirements, from phenolic and melamine resins, vinylic, heat-melting, phenolic and melamine glues, and any other adhesive material available on the market, depending on the intended uses of tubes. For example fire-retardant and hydrophobic adhesive materials can be used if the tubes to be made are required to possess features of non-inflammability and/or imperviousness to liquids and/or gases.

Each ribbon-like laminate element is rolled up to define the respective layer according to a helix arrangement the inclination angle of which to the longitudinal axis depends on the width of the laminate element itself. Actually at each helix ring the side edges of said laminate element must necessarily be disposed in side-by-side relationship with respect to each other, without any overlapping or empty spaces that would make the layer to be defined by each of them non-uniform and imprecise.

Advantageously, each laminate element 2a has a winding direction opposite to that of the adjacent laminate elements, i.e. each pair of laminate elements in mutual contact has helical extension directions crossing each other.

In accordance with the present invention, a new process is also provided which is an integral part of the invention itself.

In said process provision is first of all made for arranging a core 3 having an outer perimeter, in cross section, corresponding to the inner perimeter of the tube to be made and a length at least substantially equal to that of said tube.

The core 3 is supported at its ends by supports 4 and is rotatably moved at a controlled speed by a motor 5.

The process further provides for carrying out successive winding steps about the core 3 by a plurality of laminate elements 2a intended for defining a plurality of superposed layers in closely compacted relationship with respect to each other.

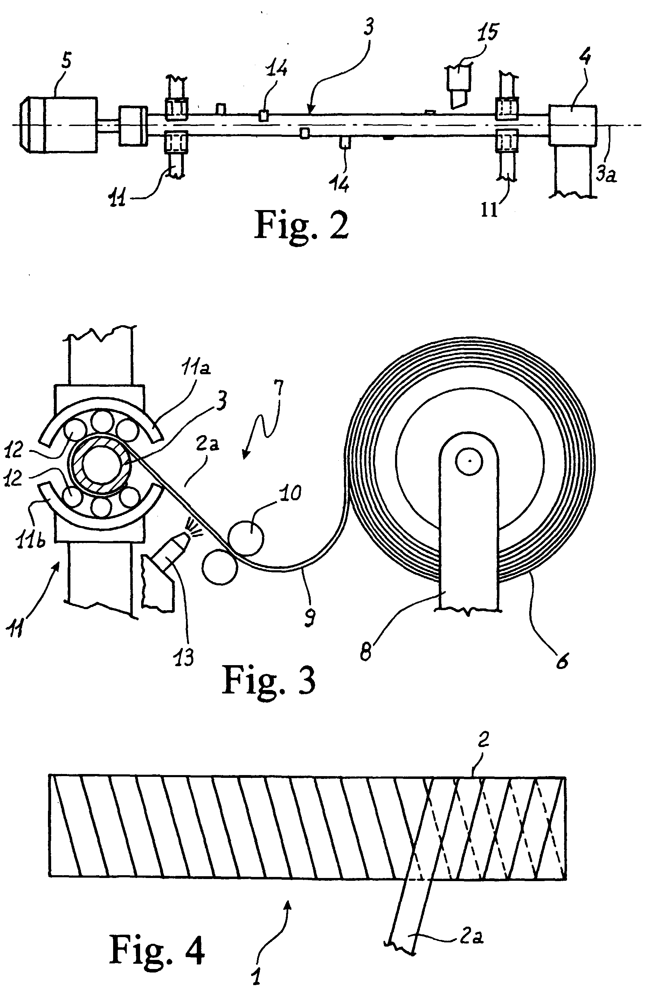

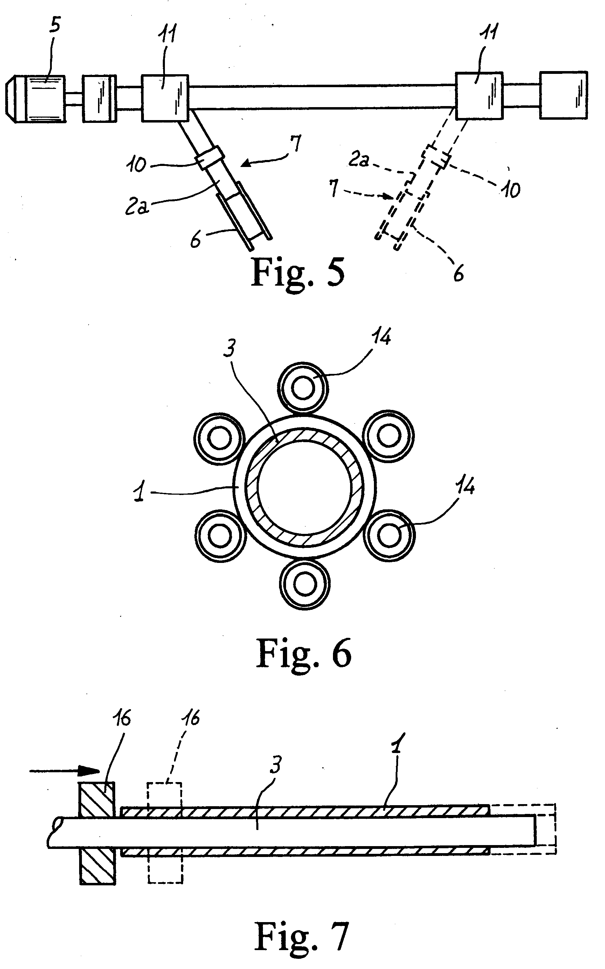

Each laminate element 2a substantially has a ribbon-like conformation and is supplied by a ribbon roll 6 supported by a movable unit 7 (Figs. 3 and 5) provided with a translational motion parallel to the axis 3a of the cylindrical core 3 and alternated with a motion in the opposite direction at each subsequent winding step.

The ribbon roll 6, supported by a reel 8 which is advantageously power-driven in such a manner as to keep the roll itself partly unrolled, forming a loop 9 avoiding dangerous tearings, can have a very important length since stretches of laminate elements of the type obtained from veneers of different wood kinds can be easily joined by gluing.

Each winding step is made in a helical direction, alternately changing the winding direction of each laminate element 2a, so as to give rise to crossed extension directions between each pair of adjacent laminate elements (see Fig. 4).

Practically, accomplishment of each winding step is obtained by suitably combining and synchronizing the rotatory motion of core 3 with the translational motion of the movable unit 7. Said unit is adjustable in the horizontal plane according to inclination angles symmetric with axis 3a, provided during the backwards and forwards stroke of the movable unit itself (see Fig. 5).

The amount of these inclination angles obviously depends on the width of the ribbon-like laminate elements employed and must be calculated so as to ensure that at each turn, the side edges of each spiral ring formed by each laminate element 2a are perfectly disposed in side-by-side relationship.

In order to cause an exact alignment of the laminate element, during the helical-winding step, provision is made for appropriate guide means 10, defined by a pair of rollers for example, which are provided with side guide edges also associated with the movable unit 7 downstream of loop 9.

The leading end of each laminate element 2a is fixed against core 3 by appropriate locking means 11 comprising two jaws 11a and 11b (Fig. 3) capable of being moved close to and away from each other, by means of fluid-operated cylinders for example. The locking means 11 at the inside of jaws 11a and 11b has some rollers or rolling bearings 12 disposed in the form of an arc and capable of enabling rotation of core 3 and the layers of laminate elements successively rolled up.

To carry out a stable adhesion of each laminate element on the laminate element previously helically wound around core 3, the inner face of all laminate elements will be coated with a suitably selected bonding or adhesive material, according to the requirements of use of the tube being manufactured, by means of a dispensing unit 13 disposed on the movable unit 7.

It is also provided that during winding of each laminate element, a strong pressing action should be exerted on the outer face of said element by a press disposed in planet arrangement and provided with presser rollers 14 helically offset about the axis of core 3 and radially movable (see Figs. 2 and 6). Each presser roller 14 advantageously has an active compressing length coincident with the laminate element width during the winding step, so as to avoid the side bands of said element being pressed several times, thereby maintaining a perfect cylindrical shape of each cylinder-like wound layer 2.

At the end of each winding step of a laminate element, said element is cut by appropriate cutting means 15.

Finally, once the tube has been manufactured with the predetermined number of layers, said tube is slipped off the core 3 by combining a thrust action carried out by mechanical means 16, defined by an axially movable flange (see Fig. 7) for example, located on one end of the tube, with a transverse shrinkage of core 3 obtained both by eliminating an additional expansion maintained by heating of said core during the winding steps, and by cooling below the room temperature at the end of the winding steps.

The additional expansion of core 3 and its cooling can be easily achieved by letting heating and cooling liquids flow in coils inserted into the core itself.

The invention achieves important advantages. Actually, first of all, the tubular article of manufacture obtained in accordance with the invention has excellent non-deformability and mechanical-strength features, while being of a reduced weight because, due to crossed winding of the tubular elements forming it, anisotropy typical of articles of manufacture obtained from massive portions of wood material can be overcome.

In addition, both transverse and longitudinal sizes can even have very high values as they exclusively depend on the available production plant and not on the sizes of the wood logs used.

The possibility of making use of veneers and peeling lathes of various kinds and, as a result, even of very differentiated features, together with the possibility of selecting adhesive materials possessing the most appropriate properties, enables the tubes of the invention to be employed in and applied to a great variety of very different technical fields.

By way of example only, the following uses are mentioned: body-bearing beams for building infrastructures, electrical-cable passageways, compressed air ducts and hydraulic ducts, movable and fixed scaffold structures, semifinished products for making gears, flanges, supports, bushes, fluid-operated cylinder liners, pipe coverings for heat insulation, support structures in cooperation with other metal structures, joinery work and furniture, posts for traffic signs, poles for electric lines, uses in the nautical field, fishing rods, sports equipment in general.

It is further to note that, while for the sake of simplicity in the accompanying drawings tubes of wood material of circular section have been represented, these tubes may be easily made also of oval, square or polygonal sections.

Finally, the process of the invention, if the slipping off step is omitted and if iron or other material tubes are selected as the core, enables appropriate coverings to be made on the last-mentioned tubes so as to allow specific uses of same, as pipelines in underground passages, for example.

## Claims

1. A tube of wood material characterized in that it comprises a plurality of successively-superposed layers mutually engaged by interposition of a binding or adhesive material and in that each layer (2) is formed of a laminate element (2a) of wood material.

2. A tube according to claim 1, characterized in that each said laminate element (2a) is of substantially ribbon-like conformation and is rolled up to define the respective layer (2) in a helical arrangement.

3. A tube according to claim 2, characterized in that the helical arrangement of each laminate element (2a) forming one layer (2) has an opposite winding direction relative to the direction of the laminate elements (2a) forming an adjacent layer (2), so as to cause couplings according to crossed extension directions of the laminate elements themselves for each pair of layers (2) in mutual contact.

4. A tube according to claim 1, characterized in that the wood material of said laminate elements (2a) is selected from kinds of wood adapted to form veneers.

5. A tube according to claim 1, characterized in that said bonding or adhesive material interposed between said layers (2) is of the fire-retardant and hydrophobic type.

6. A process for manufacturing a tube of wood material characterized in that it comprises the steps of:
- arranging a core (3) having an outer perimeter, in cross section, corresponding to the inner perimeter of the tube (1) to be made and being at least substantially as long as the length of said tube,
- carrying out subsequent steps of winding around said core (3), a plurality of laminate elements (2a) adapted to define a plurality of respective superposed layers (2), one adhesive layer having been disposed at least on the inner face of each said laminate element (2a) so as to mutually engage said laminate elements (2a) in an undetachable manner and obtain a unitary body defining the tube (1) to be made, and
- slipping off the tube (1) thus made from said core (3).

7. A process according to claim 6, characterized in that each of said winding steps provides for employment of a laminate element (2a) of substantially ribbon-like conformation and is made following a helical course in such a manner as to define the respective layer (2) with each said laminate element (2a).

8. A process according to claim 7, characterized in that said helical winding steps are made by alternately changing the winding direction of each laminate element (2a) so as to cause crossed extension directions between each pair of adjacent laminate elements.

9. A process according to claim 8, characterized in that each said winding step of a laminate element (2a) comprises the steps of:
- causing adjustment of a movable unit (7) comprising at least one ribbon roll (6) adapted to define a sequence of said laminate elements (2a) and guide means for each said laminate element, according to the inclination angle provided for each helical winding,
- fixing the leading end of the laminate element (2a) to be wound to said core,
- combining the rotatory motion of said core (2) with the translational motion parallel to the axis (3a) of the core itself of said movable unit (7), the translational motion being alternated with a motion in the opposite direction at each subsequent winding step, and
- cutting said ribbon (6) at the end of winding of each laminate element (2a).

10. A process according to claim 6, characterized in that during each said winding step of the laminate element (2a), a pressing action is provided on the outer face of the laminate element (2a) by presser rollers (14) disposed helically offset and each having an active compression length coincident with the width of the laminate element (2a).

11. A process according to claim 9, characterized in that said adhesive material layer is coated on the inner face of said laminate element (2a) by a dispenser (13) disposed on said movable unit (7).

12. A process according to claim 6, characterized in that said slipping off of the manufactured tube is obtained by combining a thrust action exerted by mechanical means (16) on one end of the tube with a transverse shrinkage of said core (3) obtained by elimination of an additional expansion achieved by heating of the core (3) during said winding steps, and/or cooling under room temperature at the end of the winding steps.
